# EUROPEAN PATENT APPLICATION

(11) **EP 3 549 760 A1**
(43) Date of publication of application: **09.10.2019**
(21) Application number: 17875616.9
(22) Date of filing: 24.11.2017
(51) Int. Cl.: B32B 15/01, B32B 15/18

(54) **ROLLED COMPOSITE STEEL PLATE OF SUPER AUSTENITIC STAINLESS STEEL AND MANUFACTURING METHOD THEREFOR**

(30) Priority: 30.11.2016 CN 201611083883
(71) Applicant: Baoshan Iron & Steel Co., Ltd., Shanghai 201900 (CN)
(72) Inventor: ZHANG, Aiwen, Shanghai 201900 (CN); LIANG, Xiaojun, Shanghai 201900 (CN); JIAO, Sihai, Shanghai 201900 (CN); DING, Jianhua, Shanghai 201900 (CN); WANG, Zhiyu, Shanghai 201900 (CN); HAO, Yingmin, Shanghai 201900 (CN)
(74) Representative: De Anna, Pier Luigi
(86) International application number: PCT/CN2017/112818
(87) International publication number: WO 2018/099326

(57) **Abstract**

A rolled clad steel plate of super austenitic stainless-steel and a manufacturing method therefor. The rolled clad steel plate comprises a base layer, and a super austenitic stainless-steel clad layer clad-rolled on the base layer. The base layer comprises the following chemical elements in percentage by mass: 0.02-0.09% of C, 0<Si≤0.35%, 1.0-2.0% of Mn, 0.02-0.04% of Al, 0.005-0.018% of Ti, 0.010-0.030% of Nb, 0.006% or less of N, and the balance of iron and other inevitable impurities. After clad-rolling is applied, the clad steel plate has a shear strength greater than or equal to 365 MPa.

## Description

### Technical field

The invention relates to a clad steel plate and a manufacturing method thereof, in particular to a clad steel plate formed by clad rolling and a manufacturing method thereof.

### Background art

As an important steel material, the clad steel plate has an unique advantage of comprehensive performances that combine the corrosion resistance of stainless-steel with the mechanical properties of carbon steel. The clad steel plates are widely used in desalination, heat exchangers, papermaking equipment, phosphoric acid storage tanks, flue gas desulfurization units, power station condensers, military and shipbuilding industries due to this advantage. With the rapid development of China's industry, as well as the requirement for the service life of various military and civilian equipments, as well as the green environmental requirements for ultra-low carbon emissions during production and use, the performance requirements for clad plates have also increased.

In the prior art, clad steel plates are usually obtained by conventional mechanical cladding and explosion cladding. In the above two processes, the performance of the clad layer and the performance of the base layer are controlled separately and then the two layers are combined. That is, before the cladding, the stainless-steel and the carbon steel can be respectively treated to a suitable state satisfying the required performance, and then the mechanical clad force or the explosive impact force is applied to combine the two steel materials into one to obtain a clad plate. However, these two clad methods each have their own shortcomings. For example, there is no complete metallurgical bond between the stainless-steel clad layer and the carbon steel base layer of the clad steel plate obtained by mechanical cladding. The two layers are only attached together by mechanical force, which causes the interface to be easily cracked and peeled off during use, and the clad plate fails quickly. The shortcoming of explosion cladding is that the process method has strict requirements on the process environment, and it needs to be carried out in deep mountains and forests where the environment is sparsely populated. In addition, the noise, vibration and shock waves generated during the explosion have a great impact on the surrounding environment. In the current period of the rising environmental awareness, this process is limited by environmental factors. In addition, the interface of the clad plate produced by explosion cladding has a low shear strength.

### Summary of the invention

One of the objects of the present invention is to provide a rolled clad steel plate of super austenitic stainless-steel. The rolled clad steel plate of super austenitic stainless-steel obtained by clad rolling has high strength, good cold-forming performance and corrosion resistance.

In order to achieve the above object, the present invention provides a rolled clad steel plate of super austenitic stainless-steel, comprising a base layer and a super austenitic stainless-steel clad layer clad-rolled on the base layer; the base layer comprises the following chemical elements in percentage by mass:
0.02-0.09% of C, 0<Si≤0.35%, 1.0-2.0% of Mn, 0.02-0.04% of Al, 0.005-0.018% of Ti, 0.010-0.030% of Nb, 0.006% or less of N, and the balance of iron and other inevitable impurities.

The design principles of each chemical element of the base layer of the rolled clad steel plate of super austenitic stainless-steel of the present invention are as follows:
C: Carbon is an important alloying element in steel. The increase in carbon content can increase the strength and hardness of the steel sheet, but at the same time reduce the plastic toughness of the steel sheet. In the technical solution of the present invention, the mass percentage of Carbon is limited by considering the following factors: the influence of carbon on the performance of the base layer steel plate, and the fact that carbon diffuses and migrates to the super austenitic stainless-steel layer during clad rolling. The super austenitic stainless-steel used in the super austenitic stainless-steel clad layer has a carbon mass percentage of less than 0.03%. Therefore, the mass percentage of carbon in the base layer is controlled to 0.02∼0.09% to reduce the influence of carbon on the corrosion resistance of the stainless-steel, while ensuring the mechanical properties and weldability of the base layer.

Si: Silicon is added to the steel to improve the purity of the steel and to deoxidize. In the technical solution of the present invention, silicon in steel has the effect of solid solution strengthening, while excessive silicon is disadvantageous to the welding property of steel. Silicon is limited to 0<Si≤0.35% in the base layer since the super austenitic stainless-steel clad layer also contains silicon. When silicon is in this range, silicon has a low influence on the corrosion resistance of the super austenitic stainless-steel clad layer, and the base layer has good welding properties.

Mn: In the technical solution of the present invention, manganese can stabilize the austenite structure, increase the hardenability of the steel, and is advantageous for reducing the critical cooling rate of martensite formation. However, excess manganese has a high tendency to segregation. Further, in the super austenitic stainless-steel clad layer, the mass percentage of manganese is less than 2.0%. Therefore, in the base layer of the rolled clad steel plate of super austenitic stainless-steel according to the present invention, the mass percentage of Mn is limited to 1.0∼2.0%. Mn in this range does not adversely affect the super austenitic stainless-steel clad layer and is advantageous for increasing the strength level of the steel.

In some preferred embodiments, in order to further improve the strength of the rolled clad steel plate of super austenitic stainless-steel according to the present invention, the mass percentage of manganese is controlled to 1.5∼1.7% in view of the interaction between manganese and carbon.

Al: In the technical solution of the present invention, Al is a strong deoxidizing element. In order to reduce the content of oxygen in the steel, the mass percentage of aluminum is controlled to 0.02∼0.04%. Further, after deoxidation, the remaining aluminum and the nitrogen in the steel form AIN precipitates, thereby increasing the strength of the steel and refining the austenite grain size of the steel upon heat treatment.

Ti: Titanium is a strong carbide forming element. The addition of a small amount of titanium in the steel is advantageous for fixing the N in the steel, and the formed TiN can prevent the austenite grain in base layer from excessively growing when heating the composite slab, thereby refining the original austenite grain size. Titanium can also chemically combine with carbon and sulfurized in steel to form TiC, TiS, Ti₄C₂S₂, which are present in the form of inclusions and second phase particles. The above carbonitride precipitates of titanium can also prevent the grain growth in heat-affected zone during welding and improve welding performance. Therefore, the mass percentage of Ti according to the present invention is controlled to 0.005-0.018%.

Nb: Niobium is a strong carbide forming element. In the rolled clad steel plate of super austenitic stainless-steel according to the present invention, the addition of niobium to the base layer is mainly for increasing the recrystallization temperature, so that the crystal grains of the base layer cannot grow rapidly after the austenite recrystallization rolling is completed, which is advantageous for the improvement of the low temperature impact toughness of the steel of the base layer. Therefore, the mass percentage of Nb in the base layer of the rolled clad steel plate of super austenitic stainless-steel according to the present invention is controlled to 0.010-0.030%.

N: Nitrogen is an austenite stabilizing element. The nitrogen in the base layer is the residual of the elements of the steelmaking gas. Therefore, in the rolled clad steel plate of austenitic stainless-steel according to the present invention, the mass percentage of nitrogen is controlled to 0.006% or less.

In the rolled clad steel plate of super austenitic stainless-steel according to the present invention, the unavoidable impurities are mainly sulfur and phosphorus, and therefore it is necessary to control the phosphorus in the base layer to 0.015% or less, and the sulfur to 0.010% or less.

It should be noted that, as a main impurity element affecting the impact toughness of the steel, the mass percentage of sulfur in the super austenitic stainless-steel clad layer is also controlled to 0.01% or less.

Further, in the rolled clad steel plate of super austenitic stainless-steel according to the present invention, the base layer further contains at least one of Ni, Cr, and Mo elements, wherein Ni≤0.20%, Cr≤0.20%, and Mo≤0.10%.

In order to further improve the implementation effect of the rolled clad steel plate of austenitic stainless-steel according to the present invention, the design principles of the above chemical elements are as follows:
Ni: Nickel is an element that stabilizes austenite, and is beneficial to further increase the strength of steel. In addition, the addition of nickel to steel can significantly increase the low temperature impact toughness of the steel. Since nickel is a precious alloying element, excessive addition increases production costs. Therefore, in the base layer of the rolled clad steel plate of super austenitic stainless-steel according to the present invention, the mass percentage of nickel is limited to 0.20% or less.

Cr: When there is a distinct segregation zone and band structure in the steel of the base layer, chromium is added to improve the performance of the steel since the segregation tendency of chromium is smaller than that of manganese. In addition, the addition of chromium to the base layer is also advantageous for suppressing the diffusion of chromium from the super austenitic stainless-steel layer into the base layer. In view of this, in the base layer of the rolled clad steel plate of super austenitic stainless-steel according to the present invention, the mass percentage of chromium is limited to 0.20% or less.

Mo: Molybdenum can refine grains and increase the strength and toughness of steel. In addition, molybdenum can reduce the temper brittleness of the steel, causing very fine carbides to precipitate during tempering, which significantly strengthens the matrix of the base layer of the steel. In addition, the addition of molybdenum is advantageous for suppressing the self-temper brittleness of the rolled clad steel plate of super austenitic stainless-steel of the present invention during air cooling after water cooling is stopped. However, excessive addition of molybdenum increases production costs. Therefore, in the base layer of the rolled clad steel plate of super austenitic stainless-steel according to the present invention, the mass percentage of molybdenum is limited to 0.10% or less.

In the technical solution of the present invention, the super austenitic stainless-steel clad layer may use a super austenitic stainless-steel, such as S31254 (254SMo), S32654 (654SMo), N08904 (904L), N08367, N08926 or other super austenitic stainless-steel known to those skilled in the art.

Preferably, in the rolled clad steel plate of super austenitic stainless-steel according to the present invention, the microstructure of the super austenitic stainless-steel clad layer is mainly austenite, and in the microstructure, the ratio of δ ferrite is not more than 5%, and the ratio of σ phase is no more than 2%.

More preferably, in the rolled clad steel plate of super austenitic stainless-steel according to the present invention, the ratio of σ phase in the range of 0.5-1.0 mm from the surface of the super austenitic stainless-steel clad layer is not more than 0.2%.

Further, in the rolled clad steel plate of super austenitic stainless-steel according to the present invention, the microstructure of the base layer is bainite, or bainite + a small amount of martensite, or bainite + a small amount of M-A island.

Further, when the microstructure of the base layer is bainite + a small amount of martensite, the ratio of martensite phase is 5% or less; when the microstructure of the base layer is bainite + a small amount of M-A island, the ratio of the M-A island phase is 5% or less.

Further, in the rolled clad steel plate of super austenitic stainless-steel according to the present invention, there is a transition layer at the junction of the base layer and the super austenitic stainless-steel clad layer, and the transition layer has a thickness of 100 µm or less.

Further, in the rolled clad steel plate of super austenitic stainless-steel according to the present invention, the base layer has a yield strength of 345 MPa or more, a tensile strength of 460 MPa or more, an elongation ratio of 20% or more, a Charpy impact energy Akv of 100 J or more at -20 °C, and a Charpy impact energy Akv of 47 J or more at -40 °C, and the rolled clad steel plate of super austenitic stainless-steel has a shear strength of 365 MPa or more.

Another object of the present invention is to provide a manufacturing method for the above rolled clad steel plate of super austenitic stainless-steel. A rolled clad steel plate of super austenitic stainless-steel having high strength can be obtained by the manufacturing method.

In order to achieve the above object, the present invention also provides a manufacturing method for the above rolled clad steel plate of super austenitic stainless-steel, comprising the steps of:
(1) providing a base plate slab and a stainless clad layer slab;
(2) assembling the base plate slab and the clad layer slab: at least two layers of the stainless clad layer slab and at least two layers of the base plate slab are assembled and welded into a composite slab, wherein, two intermediate layers in the composite slab are stainless clad layer slabs, the outer layers are base plate slabs, and a layer of separating agent is disposed between the two layers of stainless clad layer slabs;
(3) clad rolling: the composite slab is firstly heated at a temperature of 1140-1200 °C, and then subjected to multi-pass rolling in a region where austenite of the base plate slab and the clad layer slab recrystallize, with a finishing rolling temperature of 1000 °C or more;
(4) water cooling immediately after the clad rolling, wherein the start temperature of water cooling is 940 °C or higher, the final cooling temperature is 430∼550 °C, and the cooling rate is 10∼100 °C/s;
(5) hot straightening the clad-rolled plates obtained above,, then air cooling the plates to room temperature in a state of single sheet, and then cold straightening the clad-rolled plates.

The invention uses super austenitic stainless-steel as a clad layer slab to be combined with a base plate slab, and obtains a rolled clad steel plate of super austenitic stainless-steel with excellent comprehensive performance by designing reasonable heating, rolling and cooling process parameters for the composite slab formed by the clad layer slab and the base plate slab.

Before the base plate slab and the clad layer slab is assembled, it is necessary to pretreat the cladding surfaces of the base plate slab and the clad layer slab to remove the oxide on the cladding surfaces and improve the effect of cladding. In addition, a layer of separating agent is disposed on the separation interface of the two layers of clad layer slab for smoothly separating the two clad steel plates after rolling.

In order to obtain a uniform austenitizing structure in the clad layer, the heating temperature in the clad rolling of the composite slab is 1140∼1200 °C. In this temperature range, the σ phase and the carbide are completely dissolved, and the compound of the alloying element in the base layer is sufficiently dissolved.

In order to allow the austenite recrystallized grains in the clad layer to be retained without precipitation of σ phase or carbide, water cooling is performed immediately after the clad rolling. Water cooling methods known to those skilled in the art, such as DQ, ACC or DQ + ACC, may be used. The cooling rate is controlled at 10∼100 °C/s, so that the austenite grains of the base layer form a bainite structure by rapid cooling and subsequent phase transformation process, and grains are refined.

Further, in the manufacturing method of the present invention, in the step (4), the final cooling temperature of the water cooling is 430∼470 °C.

Further, in the manufacturing method of the present invention, in the step (3), the finishing rolling temperature is 1020∼1060 °C.

By optimizing composition design and controlling process parameters, the base layer of the rolled clad steel plate of super austenitic stainless-steel according to the present invention achieves a yield strength of 345 MPa or more, a tensile strength of 460 MPa or more, an elongation ratio of 20% or more, a Charpy impact energy Akv of 100 J or more at -20 °C, and a Charpy impact energy Akv of 47 J or more at -40 °C, and the rolled clad steel plate of super austenitic stainless-steel achieves a shear strength of 365 MPa or more.

Moreover, by the clad rolling of the base plate slab and the clad layer slab, the manufacturing method of the present invention allows the clad steel plate to have both excellent mechanical properties and excellent corrosion resistance of the super austenitic stainless-steel.

### Brief Description of the Drawings

Figure 1 is a photograph showing the microstructure of the base layer of the rolled clad steel plate of super austenitic stainless-steel of Example 2.
Figure 2 is a photograph showing the microstructure of the clad layer of the rolled clad steel plate of super austenitic stainless-steel of Example 2.
Figure 3 is a photograph showing the microstructure of the transition layer between the base layer and the clad layer of the rolled clad steel plate of super austenitic stainless-steel of Example 2.

### Detailed Description

The rolled clad steel plate of super austenitic stainless-steel and manufacturing method thereof of the present invention will be further explained and illustrated below with reference to the accompanying drawings and specific Examples. However, the explanations and illustrations do not unduly limit the technical solutions of the present invention.

### Examples 1-10

Table 1 lists the mass percentages of the chemical elements of the slab layers of the rolled clad steel plate of super austenitic stainless-steel of Examples 1-10.

**Table 1. (wt%, the balance is Fe and other inevitable impurities other than P, S)**

| Example | Slab layer | C | Si | Mn | P | S | Al | Ti | Nb | Ni | Cr | Mo | N |
|---|---|---|---|---|---|---|---|---|---|---|---|---|---|
| 1 | clad layer | S31254 was used | | | | | | | | | | | |
| | base plate | 0.02 | 0.35 | 2 | 0.015 | 0.01 | 0.04 | 0.018 | 0.03 | - | - | 0.1 | 0.006 |
| 2 | clad layer | S31254 was used | | | | | | | | | | | |
| | base plate | 0.05 | 0.3 | 1.5 | 0.01 | 0.005 | 0.03 | 0.012 | 0.02 | - | 0.2 | - | 0.0052 |
| 3 | clad layer | S31254 was used | | | | | | | | | | | |
| | base plate | 0.09 | 0.25 | 1.68 | 0.008 | 0.002 | 0.02 | 0.005 | 0.01 | 0.2 | - | - | 0.0043 |
| 4 | clad layer | S31254 was used | | | | | | | | | | | |
| | base plate | 0.07 | 0.22 | 1 | 0.009 | 0.004 | 0.025 | 0.01 | 0.016 | - | - | - | 0.0041 |
| 5 | clad layer | S31254 was used | | | | | | | | | | | |
| | base plate | 0.08 | 0.31 | 1.33 | 0.007 | 0.006 | 0.028 | 0.016 | 0.018 | 0.12 | - | - | 0.005 |
| 6 | clad layer | S31254 was used | | | | | | | | | | | |
| | base plate | 0.09 | 0.17 | 1.55 | 0.008 | 0.003 | 0.031 | 0.013 | 0.017 | - | 0.15 | - | 0.0038 |
| 7 | clad layer | S32654 was used | | | | | | | | | | | |
| | base plate | 0.07 | 0.33 | 1.53 | 0.006 | 0.004 | 0.035 | 0.015 | 0.018 | - | - | - | 0.0041 |
| 8 | clad layer | S32654 was used | | | | | | | | | | | |
| | base plate | 0.08 | 0.28 | 1.5 | 0.008 | 0.002 | 0.027 | 0.014 | 0.017 | - | - | - | 0.0043 |
| 9 | clad layer | N08367 was used | | | | | | | | | | | |
| | base plate | 0.08 | 0.29 | 1.52 | 0.007 | 0.004 | 0.021 | 0.016 | 0.016 | - | - | - | 0.0033 |
| 10 | clad layer | N08367 was used | | | | | | | | | | | |
| | base plate | 0.08 | 0.27 | 1.68 | 0.008 | 0.003 | 0.029 | 0.013 | 0.021 | 0.18 | - | - | 0.0042 |

The manufacturing method for the rolled clad steel plate of super austenitic stainless-steel of Examples 1-10 comprises the following steps (see Table 2 for specific process parameters in each Example):
(1) providing a base plate slab and a stainless clad layer slab;
(2) assembling the base plate slab and the clad layer slab: two layers of the stainless clad layer slab and two layers of the base plate slab were assembled and welded into a composite slab, wherein, two intermediate layers in the composite slab were stainless clad layer slabs, the outer layers were base plate slabs, and a layer of separating agent is disposed between the two layers of stainless clad layer slabs;
(3) clad rolling: the composite slab was firstly heated at a temperature of 1140∼1200 °C, and then subjected to multi-pass rolling in a region where austenite of the base plate slab and the clad layer slab recrystallize,, with a finishing rolling temperature of 1000 °C or more;
(4) water cooling immediately after the clad rolling, wherein the start temperature of water cooling was 940 °C or higher, the final cooling temperature was 430∼550 °C, and the cooling rate was 10∼100 °C/s;
(5) hot straightening the clad-rolled plates obtained above, then air cooling the plates to room temperature in a state of a single sheet, and then cold straightening the plates.

It should be noted that in the end, base plate slabs forms the base layers of the rolled clad steel plate of super austenitic stainless-steel of the Examples, and stainless clad layer slabs forms the clad layers of the rolled clad steel plate of super austenitic stainless-steel of the Examples.

Table 2 lists the specific process parameters in the manufacturing method for the rolled clad steel plate of super austenitic stainless-steel of Examples 1-10.

**Table 2.**

| Example | Heating temperature (°C) | Finishing Rolling temperature (°C) | Cooling rate (°C/s) | Start temperature of water cooling (°C) | Final cooling temperature of water cooling (°C) | Total plate thickness (clad layer + base layer) (mm) |
|---|---|---|---|---|---|---|
| 1 | 1200 | 1025 | 95 | 950 | 430 | 3+9 |
| 2 | 1180 | 1038 | 50 | 955 | 550 | 3+10 |
| 3 | 1170 | 1049 | 32 | 1000 | 520 | 3+17 |
| 4 | 1200 | 1000 | 100 | 940 | 440 | 2+8 |
| 5 | 1170 | 1050 | 35 | 999 | 450 | 2+14 |
| 6 | 1140 | 1060 | 15 | 1010 | 480 | 2+20 |
| 7 | 1190 | 1057 | 75 | 1000 | 450 | 1.5+12 |
| 8 | 1190 | 1060 | 55 | 1005 | 440 | 1.5+16 |
| 9 | 1195 | 1063 | 45 | 1015 | 440 | 2+10 |
| 10 | 1190 | 1058 | 10 | 1010 | 460 | 2+20 |

Table 3 lists the results of the mechanical properties test and the microstructure of each layer of the rolled clad steel plates of super austenitic stainless-steel of Examples 1-10.

**Table 3.**

| Example | Base layer yield strength (MPa) | Base layer tensile strength (MPa) | Base layer elongation A50 (%) | Base layer Charpy impact energy Akv at -20 °C (J) | Charpy impact energy Akv at -40 °C (J) | Shear strength (MPa) | Inner bend/outer bend/side bend d=a,180° | Microstructure (base layer + clad layer) |
|---|---|---|---|---|---|---|---|---|
| 1 | 355 | 460 | 25 | 155 | 130 | 400 | Qualified | Bainite + Austenite |
| 2 | 400 | 520 | 22 | 150 | 125 | 390 | Qualified | Bainite + Austenite |
| 3 | 385 | 505 | 24 | 155 | 100 | 440 | Qualified | Bainite + Austenite |
| 4 | 395 | 510 | 20 | 157 | 100 | 455 | Qualified | Bainite + Austenite |
| 5 | 375 | 495 | 22 | 158 | 140 | 375 | Qualified | Bainite + Austenite |
| 6 | 390 | 505 | 26 | 152 | 135 | 365 | Qualified | Bainite + Austenite |
| 7 | 480 | 630 | 24 | 145 | 95 | 420 | Qualified | Bainite + Austenite |
| 8 | 485 | 645 | 25 | 148 | 103 | 435 | Qualified | Bainite + Austenite |
| 9 | 520 | 690 | 24 | 155 | 100 | 495 | Qualified | Bainite + Austenite |
| 10 | 505 | 685 | 25 | 135 | 98 | 475 | Qualified | Bainite + Austenite |

As can be seen from Table 3, in the rolled clad steel plate of super austenitic stainless-steel of Examples 1-10, the base layer has a yield strength of 345 MPa or more, a tensile strength of 460 MPa or more, an elongation ratio of 20% or more, a Charpy impact energy Akv of 100 J or more at -20 °C, and a Charpy impact energy Akv of 47 J or more at -40 °C, and the rolled clad steel plate of super austenitic stainless-steel has a shear strength of 365 MPa or more, indicating that the mechanical properties of the Examples are good. Further, the results of the cold-forming test of the rolled clad steel plates of super austenitic stainless-steel of the Examples were qualified, indicating that they have excellent cold-forming and molding properties.

Further, the clad layer of the rolled clad steel plate of super austenitic stainless-steel of Example 2 was peeled off and sampled for a corrosion test, which was carried out with 6% ferric chloride in accordance with GB/T 17897-1999. The pitting corrosion test results are listed in Table 4.

**Table 4.**

| Example | Test temperature (°C) | Sample area (mm²) | Mass before corrosion (g) | Mass after corrosion (g) | Time (h) | Corrosion rate (g/m²h) |
|---|---|---|---|---|---|---|
| 2 | 40 | 1455.77 | 9.0208 | 9.0208 | 24 | 0.0000 |
| | 40 | 1429.02 | 8.6132 | 8.6129 | 24 | 0.0087 |
| | 60 | 1492.14 | 11.5995 | 11.3495 | 24 | 6.9810 |
| | 60 | 1510.04 | 11.9634 | 11.8742 | 24 | 2.4613 |
| | 80 | 1511.26 | 10.6915 | 10.3613 | 24 | 9.1039 |
| | 80 | 1495.96 | 11.4304 | 11.0794 | 24 | 9.7763 |

Further, the clad layers of the rolled clad steel plates of super austenitic stainless-steel of Examples 2∼3 were peeled off and sampled for sulfuric acid-copper sulfate corrosion test. The test method is in accordance with GB/T4334-2008. The intergranular corrosion test results are shown in Table 5.

**Table 5.**

| Example | Crack |
|---|---|
| 2 | No |
| 3 | No |

As can be seen from Tables 4 and 5, the clad layer of the rolled clad steel plate of super austenitic stainless-steel of the tested Examples had a good corrosion resistance after cladding.

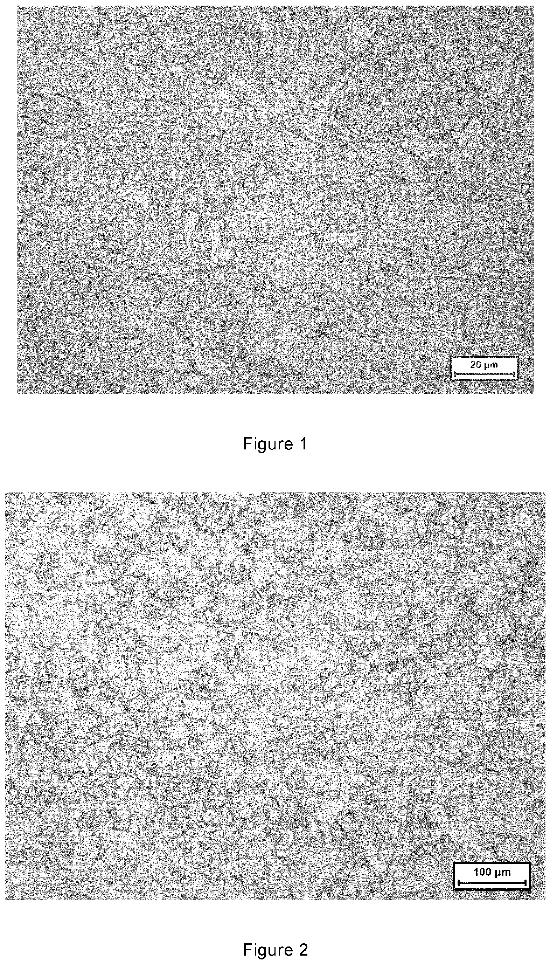

Figure 1 is a photograph showing the microstructure of the base layer of the rolled clad steel plate of super austenitic stainless-steel of Example 2. As can be seen from Figure 1, the microstructure of the base layer of Example 2 is bainite.

Figure 2 is a photograph showing the microstructure of the clad layer of the rolled clad steel plate of super austenitic stainless-steel of Example 2. As can be seen from Figure 2, the microstructure of the clad layer of Example 2 is austenite.

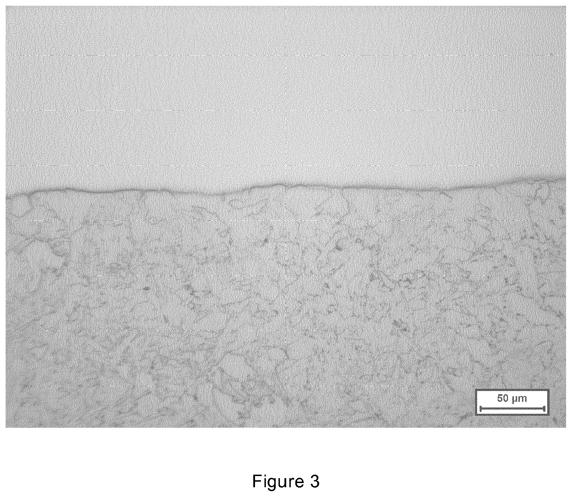

Figure 3 is a photograph showing the microstructure of the transition layer between the base layer and the clad layer of the rolled clad steel plate of super austenitic stainless-steel of Example 2. As can be seen from Figure 3, the transition layer is disposed at the junction of the base layer and the clad layer, and the thickness of the transition layer is 100 µm or less.

It should be noted that the above are merely illustrative of specific Examples of the invention. It is obvious that the present invention is not limited to the above Examples, but has many similar variations. All modifications that are directly derived or associated by those skilled in the art are intended to be within the scope of the present invention.

## Claims

1. A rolled clad steel plate of super austenitic stainless-steel, comprising a base layer and a super austenitic stainless-steel clad layer clad-rolled on the base layer; wherein the base layer comprises the following chemical elements in percentage by mass:
0.02-0.09% of C, 0<Si≤0.35%, 1.0-2.0% of Mn, 0.02-0.04% of Al, 0.005-0.018% of Ti, 0.010-0.030% of Nb, 0.006% or less of N, and the balance of iron and other inevitable impurities.

2. The rolled clad steel plate of super austenitic stainless-steel according to claim 1, wherein, the base layer further contains at least one of Ni, Cr and Mo, wherein Ni≤0.20%, Cr≤0.20%, and Mo≤0.10%.

3. The rolled clad steel plate of super austenitic stainless-steel according to claim 1, wherein, the super austenitic stainless-steel clad layer has a microstructure mainly of austenite in which, a phase ratio of δ ferrite is not more than 5%, and a ratio of σ phase is not more than 2%.

4. The rolled clad steel plate of super austenitic stainless-steel according to claim 3, wherein, the ratio of σ phase in the range of 0.5∼1.0 mm from a surface of the super austenitic stainless-steel clad layer is not more than 0.2%.

5. The rolled clad steel plate of super austenitic stainless-steel according to claim 1, wherein, the microstructure of the base layer is bainite, or bainite + a small amount of martensite, or bainite + a small amount of M-A island.

6. The rolled clad steel plate of super austenitic stainless-steel according to claim 5, wherein, in case where the base layer has a microstructure of bainite + a small amount of martensite, the ratio of martensite is 5% or less; in case where the microstructure of the base layer is bainite + a small amount of M-A island, the ratio of the M-A island is 5% or less.

7. The rolled clad steel plate of super austenitic stainless-steel according to claim 1, wherein, there is a transition layer at the junction of the base layer and the super austenitic stainless-steel clad layer, and the transition layer has a thickness of 100 µm or less.

8. The rolled clad steel plate of super austenitic stainless-steel according to any one of claims 1∼7, wherein, the base layer has a yield strength of 345 MPa or more, a tensile strength of 460 MPa or more, an elongation ratio of 20% or more, a Charpy impact energy Akv at -20 °C of 100 J or more, and a Charpy impact energy Akv at -40 °C of 47 J or more, and the rolled clad steel plate of super austenitic stainless-steel has a shear strength of 365 MPa or more.

9. A manufacturing method for the rolled clad steel plate of super austenitic stainless-steel of any one of claims 1∼8, comprising the steps of:
(1) providing a base plate slab and a stainless clad layer slab;
(2) assembling the base plate slab and the clad layer slab: at least two layers of the stainless clad layer slab and at least two layers of the base plate slab are assembled and welded into a composite slab, wherein, two intermediate layers in the composite slab are stainless clad layer slabs, the outer layers are base plate slabs, and a layer of separating agent is disposed between the two layers of stainless clad layer slabs;
(3) clad-rolling: the composite slab is firstly heated at a temperature of 1140∼1200 °C, and then subjected to multi-pass rolling in a region where austenites of the base plate slab and the clad layer slab recrystallize, with a finishing rolling temperature of 1000 °C or more
(4) water-cooling immediately after the clad-rolling, wherein the start temperature of the water cooling is 940 °C or higher, the final cooling temperature is 430∼550 °C, and the cooling rate is 10∼100 °C/s;
(5) hot straightening the clad-rolled plates obtained above, then air-cooling the plates to room temperature in a state of a single sheet, and then cold-straightening the clad-rolled plates.

10. The manufacturing method according to claim 9, wherein, in the step (4), the final cooling temperature of the water cooling is 430∼470 °C.

11. The manufacturing method according to claim 9, wherein, in the step (3), the finishing rolling temperature is 1020∼1060 °C.
